# EUROPÄISCHE PATENTSCHRIFT

(11) **EP 1 141 595 B1**
(45) Veröffentlichungstag und Bekanntmachung des Hinweises auf die Patenterteilung: **05.11.2003**
(21) Anmeldenummer: 00900445.8
(22) Anmeldetag: 13.01.2000
(51) Int. Cl.: F16J 15/16, F16N 7/36

(54) **ANORDNUNG MIT KONZENTRISCH ZUEINANDER ANGEORDNETEN UND RELATIV ZUEINANDER ROTIERBAREN BAUTEILEN UND VERWENDUNG DIESER ANORDNUNG BEI EINER REIFENFÜLLANLAGE**
DEVICE WITH COMPONENTS CONCENTRICALLY DISPOSED AND ROTATIONAL IN RELATION TO EACH OTHER AND UTILIZATION OF SAID DEVICE IN TIRE INFLATING INSTALLATION
DISPOSITIF A ELEMENTS CONCENTRIQUES EN ROTATION LES UNS PAR RAPPORT AUX AUTRES, ET UTILISATION DE CE DISPOSITIF DANS UN SYSTEME DE GONFLAGE DES PNEUMATIQUES

(30) Priorität: 13.01.1999 AT 2199
(43) Veröffentlichungstag der Anmeldung: 10.10.2001
(73) Patentinhaber: Steyr-Daimler-Puch Spezialfahrzeug AG & Co. KG, 1111 Wien (AT)
(72) Erfinder: SKOFF, Gerhard, A-1230 Wien (AT); CHRISTELY, Heinz, A-2125 Neubau (AT)
(74) Vertreter: Rippel, Andreas, Dipl.-Ing.
(86) Internationale Anmeldenummer: AT0000005
(87) Internationale Veröffentlichungsnummer: WO00042337

(56) Entgegenhaltungen:
- EP-A- 0 916 877
- DE-A- 4 105 746
- DE-C- 3 531 237
- FR-A- 880 243
- FR-A- 2 103 056
- US-A- 3 012 829
- US-A- 5 052 278

## Beschreibung

Die gegenständliche Erfindung betrifft eine Anordnung entsprechend dem Oberbegriff des Anspruches 1.

Bei zahlreichen Dichtungsanwendungen besteht das grundsätzliche Problem, daß die Dichtstelle vom umgebenden Medium nicht geschmiert wird. Das beeinflußt die Lebensdauer der Dichtungen und zwingt zum Nachschmieren der Dichtflächen unter Einhaltung bestimmter Wartungsintervalle. Dies ist auch bei einer Anordnung nach der FR-A-880 243 der Fall, welche dem Oberbegriff des Anspruches 1 entspricht.

Die Dichtungen sind oft derart ausgeführt, daß zwischen zwei Dichtlippen ein kleiner Hohlraum zur Verfügung steht, wo ein kleines Fettvolumen und somit nur ein sehr begrenzter Schmiermittelvorrat zur Verfügung gestellt werden kann. Vor allem bei Radialwellendichtringen stellt die nur ungenügende Schmierung ein besonderes Problem dar, da die Lebensdauer der Dichtungen leidet bzw. ein aufwendiges Nachschmieren in besonderen Wartungsintervallen erforderlich ist. Radialwellenringe werden beispielsweise bei Reifenfüllanlagen, die zur Verstellung des Luftdruckes im Reifen vorgesehen sind, in der am Radträger vorgesehenen Dreheintragung als gegen die Nabe abdichtende Dichtungen, eingesetzt. Hier wird mittels der Radialwellendichtringe unter atmosphärischem Druck stehende Luft gegen unter dem Reifendruck und daher höherem Druck stehende Luft abgedichtet.

Ziel der gegenständlichen Erfindung ist es nun, bei einer eingangs genannten Anordnung zu erreichen, daß die Dichtstelle zuverlässig geschmiert wird, ohne daß immer wieder Schmiermittel von außen nachgereicht werden muß.

Gelöst wird die gestellte Aufgabe erfindungsgemäß durch die kennzeichnenden Merkmale des Anspruches 1.

Mittels der gegenständlichen Erfindung ist daher durch ein Schmiermitteldepot, welches mit der bzw. den jeweiligen Schmierstellen in Verbindung steht, gewährleistet, dass eine ständige Schmierung, eine ständige Versorgung der Dichtlippen bzw. Dichtflächen erfolgen kann. Dies ist einerseits durch die während des Betriebes auftretende gegenüber der Umgebungstemperatur höhere Betriebstemperatur, die ein Verflüssigen des Schmiermittels bewirkt, und durch die während des Betriebes auftretenden Fliehkräfte gewährleistet.

Auf besonders einfache Weise lässt sich dieser Schmiermittelvorrat in einem von zwei inneren Bauteilen gebildeten Hohlraum unterbringen.

Um eine ständige Versorgung der Dichtflächen der Dichtungen mit Schmiermittel zu gewährleisten, wird bei einer bevorzugten Ausführungsform der Erfindung das Schmiermittel aus dem Schmiermittelvorrat ständig zu den Dichtstellen gedrückt.

Dies lässt sich auf einfache Weise dadurch bewerkstelligen, dass das Schmiermittel im Schmiermittelvorrat unter der Wirkung eines Kolbens steht.

Bei einer besonders einfachen Variante Kolbenbetätigung ist vorgesehen, dass dieser unter der Wirkung einer Druckfeder steht, wobei alternativ oder zusätzlich dazu der Kolben, insbesondere rechnergesteuert, mit Druckluft beaufschlagbar ist. Letztere Maßnahme gestattet ein zusätzliches Versorgen der Dichtstellen in bestimmten Zeitintervallen mit Schmiermittel.

Von besonderem Vorteil ist die Verwendung der erfindungsgemäßen Anordnung bei einer Dreheintragung, die Radialwellendichtringe enthält, die unter unterschiedlichem Druck stehende Gase, insbesondere Luft, gegeneinander abdichtet. Gerade bei solchen Dichtungen ist es wichtig, dass die Dichtflächen ausreichend geschmiert sind, um ein zeitaufwendiges Nachschmieren und zeitaufwendige Wartungsarbeiten zu vermeiden.

Die erfindungsgemäße Anordnung ist daher in besonders vorteilhafter Weise als Bestandteil von Reifenfüllanlagen, wo der äußere Bauteil der Radträger und die inneren Bauteile Nabe und Antriebswelle sind, einsetzbar.

Die gegenständliche Erfindung betrifft daher auch eine Reifenfüllanlage mit einer derartigen Anordnung.

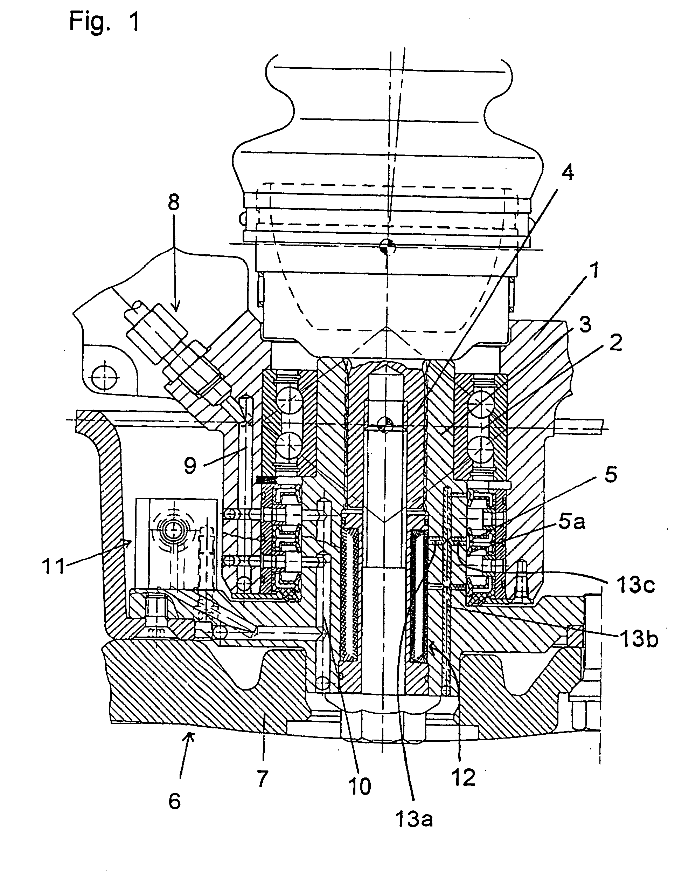

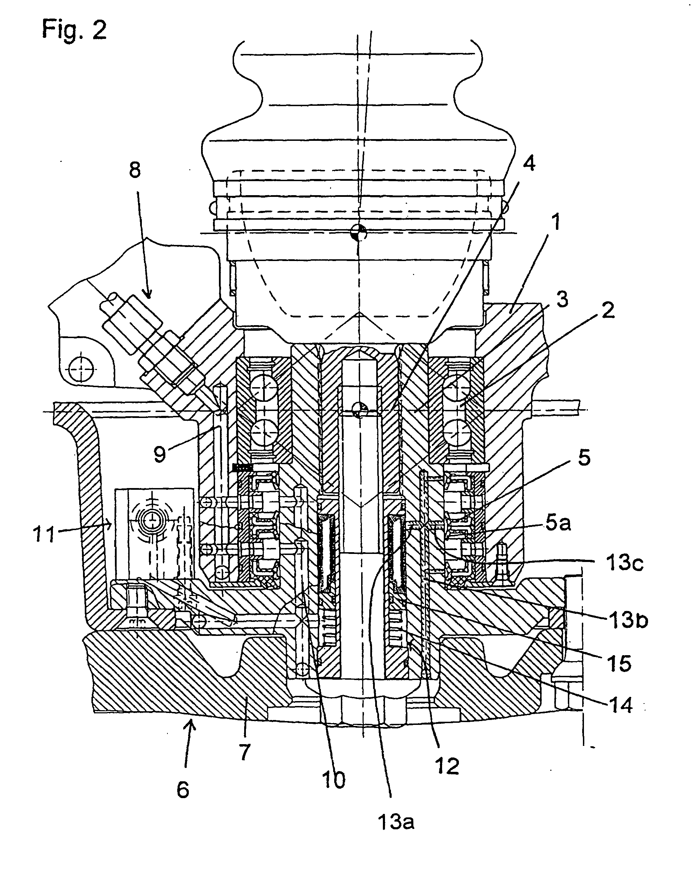

Weitere Merkmale, Vorteile und Einzelheiten der Erfindung werden nun anhand der Zeichnung, die zwei Ausführungsbeispiele darstellt, näher beschrieben. Die Fig. 1 und 2 zeigen dabei teilweise Axialschnitte durch eine Radeinheit mit je einer Ausführungsform der Erfindung. In den Zeichnungsfiguren sind dabei nur die für das Verständnis der gegenständlichen Erfindung erforderlichen Bauteile bezeichnet, wobei diese Bauteile auch nachfolgend beschrieben sind.

Der in Fig. 1 nur teilweise dargestellte Radträger 1 umfasst dabei ein Radlager 2, in dem eine Nabe 3 drehbar gelagert und von einer Antriebswelle 4 angetrieben ist. Zwischen dem Radträger 1 und der Nabe 3 ist eine Anzahl von Dichtringen 5 eingesetzt, die eine Dreheintragung bilden. An der Nabe 3 ist in bekannter Weise ein Rad 6 befestigt, welches eine Radscheibe 7 umfasst. Das Rad 6 umfasst ferner in bekannter und weiters nicht dargestellter Weise einen auf eine Felge aufgezogenen Reifen.

In der Dreheintragung zwischen dem Radträger 1 und der Nabe 3 sind hier drei Dichtringe 5 eingesetzt, die in bekannter Weise ausgeführt und angeordnet sind und mit ihren beiden Dichtlippen 5a in abdichtenden Kontakt mit dem Außenbereich der Nabe 3 sind.

Die Luftzu- bzw. abfuhr zum Reifen erfolgt über ein Anschlussstück 8, durch Kanäle bzw. Bohrungen 9 im Radträger 1 in die zwischen den Dichtringen 5 gebildeten Kammern der Dreheintragung, von dort über weitere Kanäle bzw. Bohrungen 10 zu einem an der Nabe 3 befestigten Steuerventil 11 und von dort über nicht dargestellte und auch für das Verständnis der gegenständlichen Erfindung nicht wesentliche weitere Bauteile zur Felge.

Gemäß der gegenständlichen Erfindung ist die Antriebswelle 4 in ihrem äußeren Umfangsbereich ausgenommen, um zur Nabe 3 zu einen lang gestreckten, im Querschnitt rechteckigen und umlaufenden Hohlraum 12 zu bilden, der über Bohrungen 13a, 13b, 13c von vergleichsweise geringem Durchmesser mit der Dreheintragung in Verbindung steht. Beim dargestellten Ausführungsbeispiel sind dabei zwei vom Hohlraum 12 in das Nabeninnere weisende Bohrungen 13a vorgesehen, die in eine Verbindungsbohrung 13b münden, von wo aus weitere Bohrungen 13c vorgesehen sind, die jeweils direkt im Bereich zwischen den Dichtlippen 5a der Dichtungen 5 in die Dreheintragung münden. Die Verbindungsbohrung13b ist hier senkrecht zu den Bohrungen 13a, 13c vorgesehen und stellt sicher, dass zu sämtlichen Dichtungen 5 eine Verbindung vom Hohlraum 12 besteht. Wie bereits erwähnt, münden sämtliche Bohrungen 13c an jenen Stellen in die Dreheintragung, wo sich die Dichtflächen der eingesetzten Dichtungen 5 sowie jeweils der kleine, zwischen den Dichtlippen 5a gebildete Hohlraum befindet.

Der zwischen der Antriebswelle 4 und der Nabe 3 vorgesehene Hohlraum 12 wird mit Schmiermittel befüllt und stellt somit ein Schmiermitteldepot dar, welches über die Bohrungen 13a, 13b und 13c mit den oben erwähnten Schmierstellen, den Dichtflächen in Verbindung steht.

Im Betrieb stellt sich aufgrund der Reibung der Dichtlippen 5a an der Nabe 5 sowie auch in Folge der sonstigen in diesem Bereich entstehenden Sekundärwärme in Folge von Lagerungs- oder Antriebselementen eine Temperatur im Bereich der Dichtungen 5 und somit auch der Dichtlippen 5a ein, die deutlich höher ist als die herrschende Umgebungstemperatur. Dadurch erweicht bzw. verflüssigt sich das Schmiermittel im Bereich der Dichtflächen und in weiterer Folge auch im Schmiermitteldepot. Durch die im Betrieb auftretenden Fliehkräfte wird nun Schmiermittel durch die Bohrungen 13a, 13b, 13c zu den Dichtflächen gefördert und schmieren diese. Bei Stillstand kann es vorkommen, dass Schmiermittel vom Bereich der Dichtflächen teilweise wieder abfließt, in jedem Fall bleibt jedoch ein Schmiermittelfilm an der Dichtfläche.

Mit der gegenständlichen Erfindung wird daher diesbezüglich Wartungsfreiheit der Dichtungen 5 erreicht, die sich sogar auf die gesamte Lebensdauer derselben erstrecken kann.

Eine weitere Ausführungsform der gegenständlichen Erfindung zeigt Fig. 2. Diese unterscheidet sich lediglich durch eine besondere Ausgestaltung im Bereich des Schmiermitteldepots, so dass jene Bauteile, die mit den in Fig. 1 dargestellten Bauteilen übereinstimmen, gleiche Bezugsziffern erhalten haben und gesondert nicht mehr beschrieben sind.

Wie nun Fig. 2 zeigt, wird bei dieser Ausführungsvariante der durch den Hohlraum 12 zur Verfügung stehende Raum zum Teil als Schmiermitteldepot genutzt und zum Teil zur Unterbringung eines von einer Druckfeder 14 beaufschlagten Kolbens 15 verwendet. Die mit ihrem einen Ende am Boden des Hohlraumes 12 abgestützte Druckfeder 14 beaufschlagt mit ihrem anderen Endbereich den bewegbaren Kolben 15, der sowohl gegenüber der Nabe 3 als auch der Antriebswelle 4 durch O-Ringdichtungen abgedichtet ist, wobei der Kolben 15 seinerseits das im Hohlraum 12 untergebrachte Schmiermittel beaufschlagt und somit in die Bohrungen 13a, 13b und 13c und gegen die Dichtflächen der Dichtungen 5 drückt. Als Folge der hier etwas geänderten Raumverhältnisse ist nur eine einzige Bohrung 13a zur Verbindungsbohrung 13b vorgesehen, von wo aus zu jeder Dichtung 5 je eine Bohrung 13c reicht. Bei dieser Ausführungsvariante wird daher durch die Vorspannung ständig Schmiermittel gegen die Dichtflächen gedrückt bzw. gefördert.

Bei einer weiteren, nicht dargestellten Ausführungsform der Erfindung kann der Kolben 15 zusätzlich mit Druckluft beaufschlagt werden, die über einen Zentralprozessor, einen Rechner, in bestimmten Wartungsintervallen gesteuert wird, um in jedem Fall eine gute Versorgung der Dichtflächen mit Schmiermittel sicherzustellen.

Sofern es erforderlich ist und es die örtlichen Gegebenheiten zulassen, kann an mehr als einer Stelle eine Versorgung der Dichtflächen mit Schmiermittel vorgesehen.werden.

Die gegenständliche Erfindung ist auf die dargestellte und beschriebene Anordnung nicht eingeschränkt sondern überall dort einsetzbar, wo es von Vorteil ist, bei relativ zueinander rotierenden Bauteilen Dichtungen zur Erhöhung ihrer Lebensdauer zu schmieren.

## Patentansprüche

1. Anordnung mit konzentrisch zueinander angeordneten und relativ zueinander rotierbaren Bauteilen (3, 4; 1) wobei zwischen diesen Bauteilen eine in einem äußeren Bauteil (1) angeordnete Dreheintragung mit zumindest einer Dichtung (5) mit einer zu einem inneren Bauteil (3, 4) wirkenden Dichtstelle vorgesehen ist, wobei der Dichtstelle (5) über mindestens einen im wesentlichen radial verlaufenden Kanal (13) Schmiermittel zugeführt wird, **dadurch gekennzeichnet, daß** am radial inneren Ende des Kanals (13) eine im Umfangsbereich des inneren Bauteiles (3, 4) liegender Hohlraum (12) zur Einbringung eines Schmiermittelvorrates angeordnet ist.

2. Anordnung nach Anspruch 1, **dadurch gekennzeichnet, daß** das innere Bauteil (3, 4) aus zwei Teile besteht, von welchen ein Teil den Hohlraum (12) aufweist.

3. Anordnung nach Anspruch 1 oder 2, **dadurch gekennzeichnet, daß** das Schmiermittel aus dem Schmiermittelvorrat zu den Dichtstellen gedrückt wird.

4. Anordnung nach Anspruch 3, **dadurch gekennzeichnet, daß** das Schmiermittel im Schmiermittelvorrat unter der Wirkung eines Kolbens (15) steht

5. Anordnung nach den Ansprüchen 3 oder 4, **dadurch gekennzeichnet, daß** der Kolben (15) von einer Druckfeder (14) beaufschlagt ist.

6. Anordnung nach einem der Ansprüche 3 bis 5, **dadurch gekennzeichnet, daß** der Kolben (15), insbesondere rechnergesteuert, mit Druckluft beaufschlagbar ist

7. Anordnung nach einem der Ansprüche 1 bis 6, **dadurch gekennzeichnet, daß** die Dreheintragung Radialwellendichtringe enthält, die unter unterschiedlichem Druck stehende Gase, insbesondere Luft, gegeneinander abdichtet.

8. Anordnung nach einem der Ansprüche 1 bis 7, **dadurch gekennzeichnet, daß** der Schmiermittelvorrat für die geplante Lebensdauer der umgebenden Bauteile dimensioniert ist.

9. Reifenfüllanlage mit einer gemäß zumindest einem der Ansprüche 1 bis 8 ausgebildeten Anordnung.

10. Reifenfüllanlage nach Anspruch 9, **dadurch gekennzeichnet, daß** der äußere Bauteil der Radträger (1) und der innere Bauteil die Nabe (3) und die Antriebswelle (4) umfaßen.

## Claims

1. An arrangement comprising components (3, 4; 1) arranged concentrically one to the other and rotatably relative to one another, wherein there is provided between these components a rotational feed arranged in an outer component (1) with at least one seal (5) with a sealing point acting towards an inner component (3, 4), wherein lubricant is supplied to said sealing point (5) via at least one substantially radial channel (13), **characterised in that** at the radial inner end of the channel (13) there is arranged a cavity (12) located in the circumferential region of said inner component (3, 4) for insertion of a lubricant store.

2. The arrangement according to claim 1, **characterised in that** said inner component (3, 4) consists of two parts of which one part exhibits said cavity (12).

3. The arrangement according to claim 1 or 2, **characterised in that** the lubricant is pressed from the lubricant store to the sealing points.

4. The arrangement according to claim 3, **characterised in that** the lubricant in the lubricant store is under the action of a piston (15).

5. The arrangement according to claim 3 or 4, **characterised in that** said piston (15) is acted upon by a compression spring (14).

6. The arrangement according to any one of claims 3 to 5, **characterised in that** said piston (15) is acted upon by compressed air, especially in a computer-controlled fashion.

7. The arrangement according to any one of claims 1 to 6, **characterised in that** the rotational feed contains radial shaft sealing rings which seal gases at different pressure, especially air, towards one another.

8. The arrangement according to any one of claims 1 to 7, **characterised in that** the lubricant store is dimensioned for the planned lifetime of the surrounding components.

9. A tyre inflation installation comprising an arrangement constructed according to at least one of claims 1 to 8.

10. The tyre inflation installation according to claim 9 **characterised in that** the outer component comprises the wheel carrier (1) and the inner component comprises the hub (3) and the drive shaft (4).

## Revendications

1. Disposition avec des composants disposés de manière concentrique et pivotante les uns par rapport aux autres (3, 4 ; 1), une alimentation rotative, disposée dans un composant externe (1), avec au moins une garniture d'étanchéité (5) avec une zone d'étanchéité agissant par rapport à un composant interne (3, 4), étant prévue entre lesdits composants, du lubrifiant étant amené à la zone d'étanchéité (5) par l'intermédiaire d'au moins un canal (13) s'étendant de manière essentiellement radiale, **caractérisée en ce que**, au niveau de l'extrémité interne de manière radiale du canal (13), est disposé un espace creux (12) situé dans la zone de pourtour du composant interne (3, 4) pour loger une réserve de lubrifiant.

2. Disposition selon la revendication 1, **caractérisée en ce que** le composant interne (3, 4) est constitué de deux parties, dont une partie présente l'espace creux (12).

3. Disposition selon la revendication 1 ou 2, **caractérisée en ce que** le lubrifiant est refoulé de la réserve de lubrifiant jusqu'aux zones d'étanchéité.

4. Disposition selon la revendication 3, **caractérisée en ce que** le lubrifiant est sous l'action d'un piston (15) dans la réserve de lubrifiant.

5. Disposition selon les revendications 3 ou 4, **caractérisée en ce que** le piston (15) est alimenté par un ressort à pression (14).

6. Disposition selon l'une des revendications 3 à 5, **caractérisée en ce que** le piston (15) peut être alimenté en air comprimé, notamment commandé par ordinateur.

7. Disposition selon l'une des revendications 1 à 6, **caractérisée en ce que** l'alimentation rotative contient des bagues à lèvres avec ressort qui rendent des gaz sous pression différente, notamment l'air, étanches les uns aux autres.

8. Disposition selon l'une des revendications 1 à 7, **caractérisée en ce que** la réserve de lubrifiant est dimensionnée pour la durée de vie prévue des composants environnants.

9. Dispositif de gonflage des pneumatiques avec une disposition conçue selon l'une au moins des revendications 1 à 8.

10. Dispositif de gonflage des pneumatiques selon la revendication 9, **caractérisé en ce que** le composant externe comprend la fusée (1) et le composant interne, le moyeu (3) et l'arbre de transmission (4).
